# EUROPÄISCHE PATENTSCHRIFT

(11) **EP 1 927 422 B1**
(45) Veröffentlichungstag und Bekanntmachung des Hinweises auf die Patenterteilung: **09.03.2011**
(21) Anmeldenummer: 07022667.5
(22) Anmeldetag: 22.11.2007
(51) Int. Cl.: B23K 9/08, B23K 9/20

(54) **Schweisskopf zum Aufschweissen von nicht-rotationssymmetrischen Bauteilen auf Werkstücke**
Welding head for welding non-rotation symmetrical parts to workpieces
Tête de soudage pour souder des éléments non symétriques en rotation sur des pièces

(30) Priorität: 30.11.2006 DE 102006058180
(43) Veröffentlichungstag der Anmeldung: 04.06.2008
(73) Patentinhaber: Newfrey LLC, Newark, Delaware 19711 (US)
(72) Erfinder: Hofmann, Stefan, 35578 Wetzlar (DE)
(74) Vertreter: Steil, Christian

(56) Entgegenhaltungen:
- EP-A- 1 649 962
- DE-A1- 1 565 003
- DE-A1-102004 060 389
- DE-U1- 20 018 096
- FR-A- 2 754 198
- GB-A- 678 955
- GB-A- 2 042 391
- JP-A- 9 024 472
- JP-A- 2001 150 139
- US-A- 2 413 189
- US-A- 2 439 830
- DATABASE WPI Week 197850 Derwent Publications Ltd., London, GB; AN 1978-91192A XP002484232 -& SU 591 279 A (MEC ENG ELEC ENG) 5. Februar 1978 (1978-02-05)

## Beschreibung

Die vorliegende Erfindung betrifft einen Schweißkopf gemäß dem Oberbegriff des Anspruchs 1, wie er aus der DE 10 2004 060 389 A1 bekannt ist.

Ein solcher Schweißkopf kann zum Schweißen von nicht-rotationssymmetrischen metallischen Bauteilen (z.B. Halter, Masseflansche o.ä.) auf metallische Werkstücke wie z.B. Karosseriebleche von Kraftfahrzeugen dienen. Das Bauteil weist dabei in der Regel eine Schweißfläche auf, die in einer Richtung deutlich länger ist als in einer Richtung quer hierzu.

Die Basistechnologie für diese Art von Schweißprozess entspricht dem so genannten Bolzenschweißen. Bevorzugt erfolgt das Aufschweißen folglich im Kurzzeit-Hubzündungsverfahren mit magnetischer Lichtbogenablenkung.

Vorrichtungen zum Hubzündungsschweißen mittels magnetischer Lichtbogenablenkung sind seit langer Zeit bekannt und haben sich in der Praxis bewährt.

So zeigt z.B. die US 2,406,474 von 1946 bereits eine Vorrichtung zum Bolzenschwei. βen und eine Schaltung zur Stabilisierung eines SchweiBlichtbogens. Dazu verwendet die Erfindung eine Spule mit einer Windung, die in Serie an den Leiter des Schweißstroms geschaltet ist. Das hat zur Folge, dass zeitgleich mit Fließen des Schweißstromes ein Magnetfeld ausgebildet wird. Der Bolzenhalter, welcher sich im Zentrum der Spule befindet, dient als Spulenkern.

In der US 2,413,189 ist eine Vorrichtung zum Schweißen von Bolzen dargestellt, welche für den manuellen Einsatz vorgesehen ist Die Schrift zeigt außerdem, dass es notwendig ist, die Zuleitung für den Schweißstrom flexibel auszuführen, da es verfahrensgemäß notwendig ist, den Bolzenhalter in einer Hubbewegung vom Werkstück wegzubewegen.

Die DE 1.565 003 zeigt ebenfalls eine Vorrichtung zum Schweißen von Befestigungselementen mit dem Lichtbogenbolzenschweißen nach dem Hubzündungsprinzip. Auch in dieser Vorrichtung ist eine Spule, bestehend aus einer Windung, in Serie zum Schweißstrom geschaltet und um die Schweißstelle herum angeordnet. Sinn und Zweck dieser Vorrichtungen ist zum einen, eine Blaswirkung des Lichtbogens zu vermeiden, und zum anderen, beim Verschweißen von rohrartigen Bauteilen (Befestigungselementen) ein Rotieren des Lichtbogens zu erzeugen.

Aus der DE 102 53 415 ist ein Verfahren und eine Vorrichtung zum Anschweißen rechteckförmiger Blechlaschen bekannt. Diese Vorrichtung weist ebenfalls eine Spulenanordnung auf, welche eine lineare Bewegung des Lichtbogens erzeugen soll. Im Gegensatz zu den weiter oben genannten Dokumenten ist in diesem Fall die Spulenanordnung nicht in Serie zum Schweißstrom geschaltet.

Aus dem Dokument DE 200 18 096 U1 ist eine Schweißvorrichtung in Form einer Schweißpistole bekannt, bei der ein Schweißstrom durch einen Pistolengriff hindurch zu einem Anschluss im Inneren des Pistolengehäuses geführt wird, der elektrisch mit einer Halteeinrichtung für einen Schweißbolzen verbunden ist. Die Halteeinrichtung ist mittels eines Kolbens in axialer Richtung bewegbar, wobei der Kolben über ein Isolierstück mit einem Magnetanker verbunden ist. Der Magnetanker wirkt mit einer Spuleneinrichtung zusammen, mittels der der Magnetanker und der Kolben in axialer Richtung bewegbar sind.

Ähnliche handgeführte Bolzenschweißgeräte, bei denen der Schweißstrom direkt einer Halteeinrichtung zugeführt wird und die Halteeinrichtung elektrisch gegenüber einer Aktuatorik isoliert ist, sind aus den Dokumenten US-A-2,439,830 und B 678 955 A bekannt.

Die Verwendung von Schutzgas mittels Strahlführung ist in der DE 196 38 287 offenbart. Hier wird Schutzgas seitlich an die Fügestelle herangeführt und ermöglicht ein oxidfreies Löten, da durch das Anströmen die Umgebungsluft fortgeblasen wird.

Nachteilig ist jedoch bei den vorbenannten Verfahren und Vorrichtungen, dass schweißstromftihrende Kabel aufwändig aus dem Vorrichtungsgehäuse in den vorderen Schweißbereich geführt werden müssen. Die Steifigkeit und vor allen Dingen die träge Masse dieser schweißstromführenden Kabel, die aufgrund der hohen Stromstärke relativ stark ausgeführt sind, führen zu Behinderungen in den Bewegungsabläufen. Beim Lichtbogenbolzenschweißen nach dem Hubzündungsverfahren laufen Hubbewegungen im Millisekunden-Bereich ab und stellen daher hochdynamische Prozesse dar.

Basierend auf diesen Erkenntnissen besteht eine erste Aufgabe der vorliegenden Erfindung darin, einen Schweißkopf mit möglichst einfachem Aufbau und geringer Masse zu schaffen, der vorzugsweise zudem eine möglichst einfach aufgebaute Magnetspule aufweist, die durch den Schweißstrom gespeist wird, und die mit einer geringen trägen Masse auskommt.

Es ist eine weitere Aufgabe der Erfindung, eine Vorrichtung zu schaffen, deren Schutzgasführung das Schweißverhalten beim Verschweißen von laschenartigen Haltern begünstigt.

Die obige erste Aufgabe wird gemäß der vorliegenden Erfindung gelöst durch einen Schweißkopf gemäß Anspruch 1, wobei die Halteeinrichtung mittels einer Verbindungseinrichtung mechanisch mit einer Schnittstelleneinrichtung verbunden ist, über die der Schweißstrom zuführbar ist, wobei die Verbindungseinrichtung in ein erstes Anschlussstück und ein zweites Anschlussstück unterteilt ist, die elektrisch gegeneinander isoliert sind.

Ein Schweißkopf der erfindungsgemäßen Art wird häufig an einem Arm eines Roboters oder dergleichen befestigt. Der Schweißkopf beinhaltet dabei regelmäßig eine Kopfbasis, die fest mit dem Arm verbunden ist und beispielsweise einen Antrieb wie einen Linearmotor zum Antreiben der Halteeinrichtung beinhalten kann. Ferner beinhaltet der Schweißkopf regelmäßig einen Kopfvorbau, der die Halteeinrichtung für das Bauteil beinhaltet und bevorzugt kompakt ausgebildet wird, um auch an unzugänglicheren Stellen Bauteile auf Werkstücke aufbringen zu können.

Derartige Schweißköpfe werden regelmäßig in der Fahrzeugindustrie verwendet, wo die nicht-rotationssymmetrischen Bauteile auf Karosseriebleche aufgeschweißt werden, wo sie als Halter oder Anker für verschiedenste Befestigungsaufgaben (Kabel, Leitungen etc.) dienen.

Ferner beinhaltet die Kopfbasis regelmäßig die elektronische Schnittstelle zu einer Energieversorgung. Die hierbei verwendeten Schweißströme sind relativ hoch und werden regelmäßig von der Kopfbasis in die Halteeinrichtung des Kopfvorbaus eingeleitet. Die Halteeinrichtung ist dabei im Stand der Technik durchgehend elektrisch leitend ausgebildet und kann folglich den Schweißstrom direkt in das Bauteil leiten.

Erfindungsgemäß ist nun vorgesehen, die Halteeinrichtung mittels einer Verbindungseinrichtung mechanisch mit einer Schnittstelleneinrichtung zu verbinden. Die Schnittstelleneinrichtung dient dazu, den Kopfvorbau mit der Kopfbasis zu verbinden. Die Schnittstelleneinrichtung kann dabei eine mechanische Schnittstelle wie auch eine Schnittstelle für sonstige Versorgungen sein (wie für den elektrischen Schweißstrom, für Schutzgas etc.). Aufgrund der vorgesehenen Schnittstelleneinrichtung ist es vergleichsweise einfach möglich, den Kopfvorbau von der Kopfbasis zu trennen, so dass der Kopfvorbau leicht austauschbar ist (zu Wartungszwecken oder Ähnlichem).

Die Verbindungseinrichtung ist nun in ein erstes und ein zweites Anschlussstück unterteilt, die elektrisch gegeneinander isoliert sind. Folglich kann ein in die Schnittstelleneinrichtung eingeleiteter elektrischer Strom nicht direkt über die Verbindungseinrichtung in die Halteeinrichtung geleitet werden. Diese Anordnung ermöglicht es, gemäß der Erfindung, jedoch, unmittelbar an dem Kopfvorbau einen weiteren elektrischen Verbraucher seriell anzuschließen, indem der weitere elektrische Verbraucher mit einem Ende an das erste Anschlussstück und mit dem anderen Ende an das zweite Anschlussstück angeschlossen wird. Dabei fließt der Schweißstrom dann von der Schnittstelleneinrichtung in das erste Anschlussstück der Verbindungseinrichtung, von dort in den zusätzlichen elektrischen Verbraucher und von dort in das zweite Anschlussstück, von wo aus der elektrische Strom dann in die Halteeinrichtung und folglich in das Bauteil geleitet werden kann.

Der Vorteil hierbei ist, dass die elektrische Verkabelung unmittelbar an dem Kopfvorbau vorgenommen und folglich räumlich kompakt ausgebildet werden kann. Mit anderen Worten ist es nicht notwendig, einen weiteren elektrischen Verbraucher über eine Verkabelung von der Kopfbasis aus zu versorgen.

Obgleich der erfindungsgemäße Schweißkopf vorzugsweise für nicht-rotationssymmetrische Bauteile angewendet wird, ist generell auch eine Verwendung für rotationssymmetrische Bauteile wie Schweißbolzen denkbar.

Ferner ist es auch möglich, den Schweißkopf an einer manuellen Schweißeinrichtung (Schweißpistole) zu verwenden. In diesem Fall ergeben sich die gleichen Vorteile wie bei der Verwendung an einem automatisierten Robotersystem.

Die Aufgabe wird somit vollkommen gelöst.

Von besonderem Vorzug ist es, wenn das erste Anschlussstück mit einem ersten elektrischen Anschluss einer Spuleneinrichtung elektrisch verbunden ist (die einen zusätzlichen elektrischen Verbraucher bildet), so dass der Schweißstrom von der Schnittstelleneinrichtung über das erste Anschlussstück in die Spuleneinrichtung leitbar ist.

Diese Ausführungsform ist insbesondere dann vorteilhaft, wenn der mit dem erfindungsgemäßen Schweißkopf durchgeführte Schweißprozess mit magnetischer Lichtbogenablenkung erfolgt. Die Lichtbogenablenkung erfolgt dabei über das elektromagnetische Feld, das von der Spuleneinrichtung erzeugt wird. Die Spuleneinrichtung kann beispielsweise im Bereich um das Bauteil herum angeordnet sein.

Dabei ist es von besonderem Vorteil, wenn das zweite Anschlussstück mit der Halteeinrichtung und mit einem zweiten elektrischen Anschluss der Spuleneinrichtung elektrisch verbunden ist, so dass der Schweißstrom von der Spuleneinrichtung über das zweite Anschlussstück und die Halteeinrichtung in das Bauteil leitbar ist.

Gemäß einer weiteren bevorzugten Ausführungsform sind das erste und das zweite Anschlussstück in Richtung der Schweißachse miteinander ausgerichtet. Das erste und das zweite Anschlussstück können beispielsweise stabförmig ausgebildet sein, wobei zwischen den Anschlussstücken ein elektrisches Isolierstück angeordnet ist. Hierdurch kann sich in radialer Richtung ein kompakter Aufbau erzielen lassen.

Gemäß einer weiteren bevorzugten Ausführungsform sind das erste und das zweite Anschlussstück mittels eines elektrischen Isolierstückes elektrisch gegeneinander isoliert, aber über das elektrische Isolierstück mechanisch miteinander verbunden.

Hierdurch ergibt sich eine konstruktiv einfache Bauweise.

Ferner ist es vorteilhaft, wenn der Kopfvorbau weiterhin ein Mundstück aufweist, das bei einem Schweißvorgang im Wesentlichen um das Bauteil herum angeordnet ist, wobei die Halteeinrichtung und das Mundstück entlang einer Schweißachse relativ zueinander beweglich ausgebildet sind.

Hierbei wird das Mundstück z.B. über geeignete Befestigungsmittel im Wesentlichen starr mit der Kopfbasis verbunden, wohingegen die Halteeinrichtung über einen an der Kopfbasis vorgesehenen elektrischen Antrieb relativ hierzu bewegbar ist.

Dabei versteht sich, dass der Linearmotor bevorzugt an der Verbindungseinrichtung im Bereich der Schnittstelleneinrichtung angreift, so dass der Linearmotor die Verbindungseinrichtung und die damit verbundene Halteeinrichtung bewegt.

Dabei ist es von besonderem Vorteil, wenn wenigstens eines der zwei Anschlussstücke über ein zugeordnetes Schweißstromkabel mit einer Spuleneinrichtung verbunden ist, die an dem Mundstück festgelegt ist, wobei das Schweißstromkabel vorzugsweise an einem oberen Bereich des Mundstückes in dieses eingeführt ist.

Bei dieser Ausführungsform kann folglich eine im Bereich des Mundstückes vorgesehene Spuleneinrichtung auf kompakte Weise mit dem ersten Anschlussstück verbunden werden.

Ferner ermöglicht die Einführung des Schweißstromkabels an einem oberen Bereich des Mundstückes, dass ein vorderer Bereich des mundstückes mit möglichst geringen Störkonturen ausgebildet sein kann.

Vorzugsweise weist der Kopfvorbau das Mundstück auf, wobei an dem Mundstück eine Spuleneinrichtung mit wenigstens einer Windung angeordnet ist und wobei die Spuleneinrichtung innerhalb einer Außenwand des Mundstückes angeordnet ist.

Bei dieser Ausführungsform kann die Spuleneihrichtung gut gegenüber äußeren mechanischen Einwirkungen geschützt werden.

Von besonderem Vorteil ist es hierbei, wenn das Mundstück einen Ringraum aufweist, innerhalb dessen die Spuleneinrichtung angeordnet ist.

Bei dieser Ausführungsform ist die Spuleneinrichtung nicht nur gegenüber mechanischen Einflüssen von außen sondern auch von innerhalb des Mundstückes geschützt.

Ferner ist es vorteilhaft, wenn das Mundstück mehrteilig ausgebildet ist, mit einem Innenteil, innerhalb dessen das Bauteil gehalten ist und an dessen Außenseite die Spuleneinrichtung angeordnet ist, und mit einem Außenteil, das die Spuleneinrichtung umschließt und die Außenwand des Mundstückes bildet,

Durch die Zweiteiligkeit lässt sich das Mundstück auf einfache Weise herstellen.

Ferner ist es bevorzugt, wenn das Außenteil wenigstens eine Ausnehmung zur Durchführung eines Schweißstromkabels aufweist. Diese Ausnehmung liegt vorzugsweise in einem oberen Bereich des Mundstückes, so dass Störkonturen weitgehend vermieden werden können.

Bevorzugterweise ist an dem Schweißkopf ein Mundstück vorgesehen, wobei an dem Mundstück eine Schutzgaszuführeinrichtung angeordnet ist und wobei die Schutzgaszuführeinrichtung wenigstens eine Düse aufweist, die so angeordnet ist, dass das Bauteil innerhalb des Mundstückes im Wesentlichen tangential anblasbar ist.

Dies hat den Vorteil, dass immer eine ausreichende Menge an Gas zur Verfügung steht, um den Schweißbereich sicher abdecken zu können.

Die Schutzgaszurühreinnehtung kann beispielsweise an dem Mundstück festgelegt sein bzw. an Mitteln zur Befestigung des Mundstückes an der Kopfbasis. Ferner kann eine Schnittstelleneinrichtung, mit der der Kopfvorbau mit der Kopfbasis verbindbar ist, auch eine Schutzgasschnittstelle bzw. einen Schutzgaszuführanschluss beinhalten,

Dabei ist es von besonderem Vorteil, wenn der Kopfvorbau eine obere Öffnung aufweist, über die in das Mundstück eingeblasenes Schutzgas nach oben abgeführt werden kann.

Von besonderem Vorteil ist es, wenn eine solche obere Öffnung an dem Mundstück vorgesehen ist, so dass das eingeblasene Schutzgas beispielsweise zwischen dem Mundstück und der Verbindungseinrichtung bzw. der Halteeinrichtung nach oben abgeführt werden kann.

Gemäß einem vierten Aspekt der vorliegenden Erfindung ist an dem Schweißkopfvorbau ein Mundstück vorgesehen, wobei an dem Mundstück eine Schutzgaszuführeinrichtung angeordnet ist und wobei die Schutzgaszuführeinrichtung wenigstens einen Zuführkanal aufweist, der von außen zu dem Mundstück geführt ist und an einem unteren Bereich des Mundstückes in das Innere des Mundstückes hinein geführt ist.

Bei dieser Ausführungsform ist der Zuführkanal fest an dem Kopfvorbau vorgesehen und kann folglich störkonturarm ausgebildet werden. Das Schutzgas kann beispielsweise im Bereich der Schnittstelleneinrichtung in den Zuführkanal eingeführt werden und von dort über geeignete Kanäle störkonturarm zu dem unteren Bereich des Mundstückes geführt werden.

Dabei ist es von besonderem Vorteil, wenn der Kopfvorbau einen festen Abschnitt aufweist, der starr mit der Kopfbasis verbunden ist und der das Mundstück beinhaltet. Ferner kann der Zuführkanal fest mit dem festen Abschnitt des Kopfvorbaus verbunden sein.

Ferner ist es insgesamt vorteilhaft, wenn ein in Bezug auf die Kopfbasis beweglicher Teil des Kopfvorbaus über die Schnittstelleneinrichtung zum einen den Schweißstrom erhält und zum anderen mechanisch an einer Antriebseinrichtung zum Antreiben des beweglichen Teils festgelegt ist.

Der bewegliche Teil kann dabei insbesondere die Verbindungseinrichtung und die Halteeinrichtung beinhalten.

Ferner ist es vorteilhaft, wenn Anschlusskabel zum Verbinden der Anschlussstücke mit dem weiteren elektrischen Verbraucher (beispielsweise der Spuleneinrichtung) im Wesentlichen in Form einer Schraubenlinie um die Verbindungseinrichtung herum geführt sind. Hierdurch können die axialen Relativbewegungen zwischen der Verbindungseinrichtung und der (in der Regel fest an dem Mundstück angeordneten) Spuleneinrichtung auf einfache Weise schraubenartig federnd aufgenommen werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Vorderansicht einer Schweißvorrichtung mit einem Schweißkopf gemäß einer Ausführungsform der Erfindung;
- Fig. 2: die Schweißvorrichtung der Fig. 1 von der Seite;
- Fig. 3: eine Längsschnittansicht durch einen Kopfvorbau des in den Fig. 1 und 2 gezeigten Schweißkopfes; und
- Fig. 4: eine perspektivische Ansicht des Kopfvorbaus der Fig. 3.

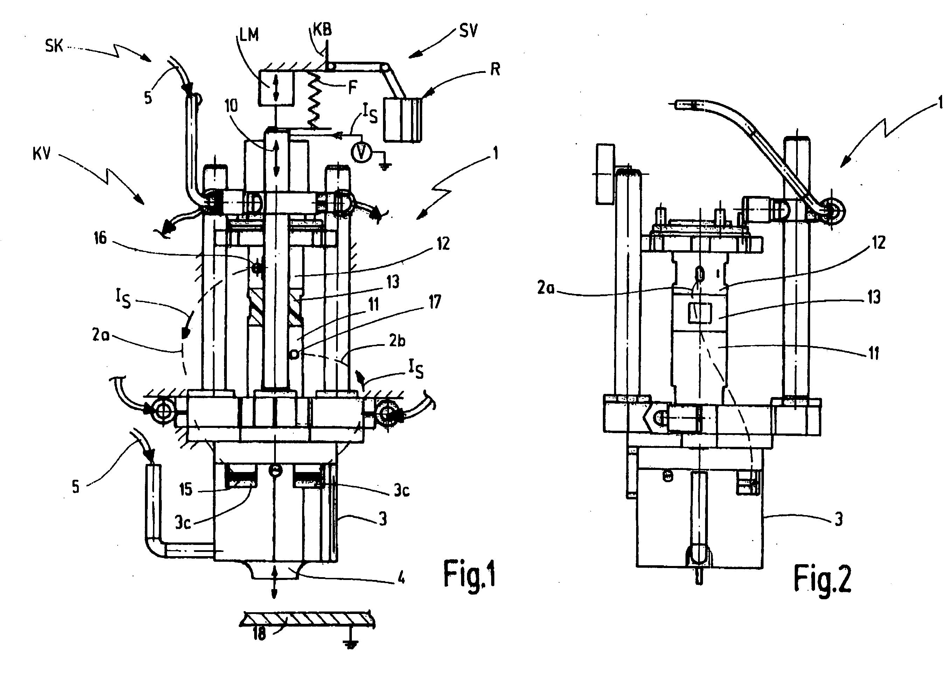

In Fig. 1 ist eine Schweißvorrichtung SV zum Schweißen von nicht-rotationssymmetrischen Bauteilen auf Werkstücke wie Karosseriebleche 18 gezeigt.

Die Schweißvorrichtung SV beinhaltet einen Roboter R, der beispielsweise als Knickarmroboter ausgebildet sein kann. An einem Handhabungsende des Roboters R ist ein Schweißkopf SK festgelegt. Der Schweißkopf SK weist eine Kopfbasis KB auf, die starr an dem Handhabungsende des Roboters R festgelegt ist. Die Kopfbasis KB beinhaltet einen Linearmotor LM (oder eine andere Art von Antrieb), der dazu ausgelegt ist, ein Bauteil 4 (bzw. ein Schweißbauelement bzw. Weldfast^{®}-Halter) relativ zu der Kopfbasis KB zu bewegen, und zwar entlang einer Längs- bzw. Schweißachse, die in Fig. 1 von oben nach unten verläuft.

Der Schweißkopf SK weist ferner einen Kopfvorbau (front end) KV auf. Der Kopfvorbau KV ist über eine Schnittstelleneinrichtung S mit der Kopfbasis KB verbunden. Die Schnittstelleneinrichtung S beinhaltet zum einen eine mechanische Schnittstelle (beispielsweise eine Schraubverbindung). Ferner beinhaltet die Schnittstelleneinrichtung S eine elektrische Schnittstelle zum Übergeben eines Schweißstromes von der Kopfbasis an den Kopfvorbau KV.

Der Kopfvorbau KV ist in den Figuren auch mit dem Bezugszeichen 1 gekennzeichnet.

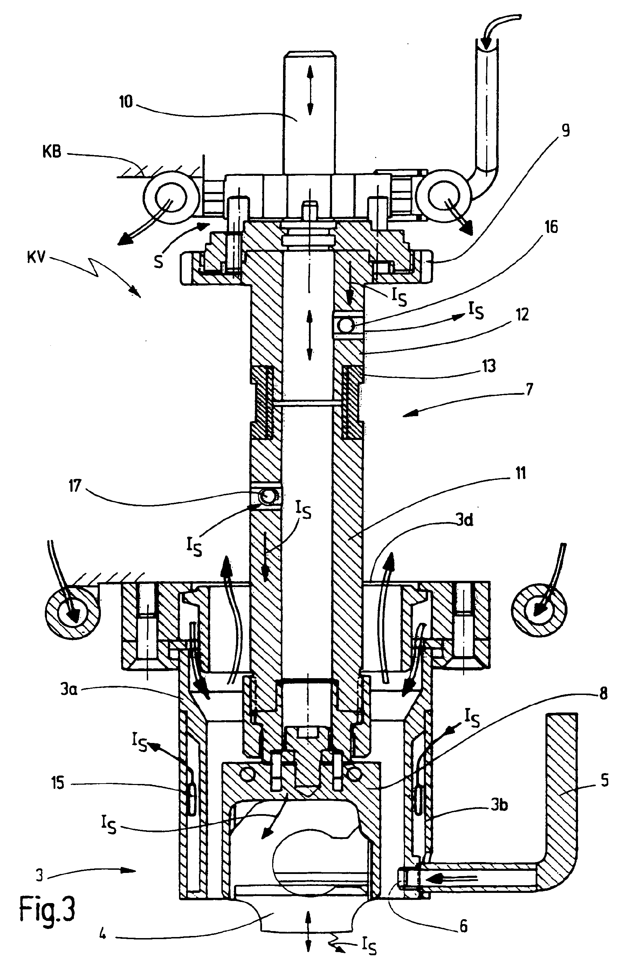

Die Schweißvorrichtung SV weist ferner eine Schweißspannungsversorgung V auf, über die ein Schweißstrom Iₛ zugeführt wird, und zwar zu der Kopfbasis KB. Der Schweißstrom Iₛ wird über die Schnittstelleneinrichtung (siehe Fig. 3) zu dem Kopfvorbau KV geleitet.

Wie es in den Fig. 1 und 2 zu sehen ist, weist der Kopfvorbau KV zwei Längsstreben auf, die parallel zu der Schweißachse angeordnet sind und sich von der Schnittstelleneinrichtung S hin zu einem unteren Ende des Kopfvorbaus KV erstrecken. Am unteren Ende der Stege ist ein Ringabschnitt angeordnet, an dessen unterem Ende ein Schutzgasmundstück 3 festgelegt ist. Das Schutzgasmundstück 3 ist folglich fest mit der Kopfbasis KB verbunden.

Der Kopfvorbau KV weist ferner eine Verbindungseinrichtung (auch Verbindungsflansch) 7 auf, die im Wesentlichen stabförmig ausgebildet ist und sich von der Schnittstelleneinrichtung S durch den Ringabschnitt hindurch erstreckt. Ein oberes Ende der Verbindungseinrichtung 7 ist mit einem Schnittstellen-Anschlussstück 10 verbunden. Dieses wiederum ist mit dem Linearmotor LM verbunden. Ferner ist es möglich, die Verbindungseinrichtung 7 in Schweißachsenrichtung nach unten vorzuspannen, und zwar mittels einer Feder F, wie sie in Fig. 1 angedeutet ist. Der Linearmotor LM kann in diesem Fall alleine zum schnellen Abheben gegen die Federkraft der Feder F ausgelegt sein.

Die Verbindungseinrichtung 7 ist in einem oberen Bereich mittels der Schnittstelleneinrichtung S axial geführt bzw. radial gelagert. In diesem Bereich weist die Schnittstelleneinrichtung S ferner einen Nutmutteranschluss auf, mittels dessen sich der Kopfvorbau KV beispielsweise mittels einer Mutter an der Kopfbasis KB mechanisch festlegen lässt.

An einem unteren Ende ist die Verbindungseinrichtung 7 innerhalb des Ringabschnittes axial geführt bzw. radial gelagert (was in den Figuren jedoch nicht näher dargestellt ist). Gegebenenfalls kann auf eine Axialführung bzw. eine radiale Lagerung in diesem Bereich auch verzichtet werden.

An einem unteren Ende der Verbindungseinrichtung 7 ist eine Halteeinrichtung 8 vorgesehen, die zur Aufnahme eines Bauteils (Schweißelementes) dient. Die Halteeinrichtung 8 kann beispielsweise dazu ausgelegt sein, ein Schweißbauteil 4 klemmend festzulegen.

Die Verbindungseinrichtung 7 ist in axialer Richtung unterteilt in ein oberes Anschlussstück 12 und ein unteres Anschlussstück 11. Das obere Anschlussstück 12 und das untere Anschlussstück 11 sind über ein elektrisch isolierendes Isolierstück 13 miteinander verbunden, so dass die Anschlussstücke 11, 12 elektrisch gegeneinander isoliert sind.

Das obere Anschlussstück 12 ist mit dem Schnittstellen-Anschlussstück 10 verbunden, in das im Bereich der Kopfbasis KB der Schweißstrom Iₛ eingeführt wird.

Das untere Anschlussstück 11 ist mechanisch und elektrisch mit der Halteeinrichtung 8 verbunden.

Wie bereits oben erläutert, ist an dem unteren Ringabschnitt des Kopfvorbaus KV ein Mundstück 3 festgelegt, in einer Position, so dass es ein von der Halteeinrichtung 8 gehaltenes Bauteil 4 im Wesentlichen umgibt. Das Mundstück 3 weist eine Mundstückinnenhülse 3a und eine hierzu konzentrische Mundstückaußenhülse 3b auf. Zwischen den Hülsen 3a, 3b ist eine Spulenanordnung (MAC-Spule, d.h. Spule zur magnetischen Lichtbogenablenkung) angeordnet.

Wie es insbesondere in den Fig. 1, 2 und 4 gezeigt ist, ist die Spuleneinrichtung 15 an einem Ende (über einen Spuleneingang 14a) mit dem oberen Anschlussstück 12 verbunden, und zwar an einer Anschlussstelle 16. Das hierzu verwendete Schweißstromkabel ist in den Figuren mit 2a bezeichnet.

Ein Ausgangsende (Spulenausgang) 14b der Spuleneinrichtung 15 ist in entsprechender Weise über ein Schweißstromkabel 2b mit einer Anschlussstelle 17 des unteren Anschlussstückes 11 der Verbindungseinrichtung 7 verbunden.

Wie es in Fig. 1, 2 und 4 dargestellt ist, können die Schweißstromkabel 2a, 2b im Wesentlichen schraubenförmig oder zumindest gewunden von der Verbindungseinrichtung zu dem Mundstück 3 geführt werden.

Das Mundstück 3 weist, wie es in Fig. 1 gezeigt ist, zwei Ausnehmungen 3c auf, die an der Mundstückaußenhülse 3b ausgebildet sind. Über diese Ausnehmungen 3c können die Schweißstromkabel 2a, 2b mit der Spulenanordnung verbunden werden.

Ferner ist in Fig. 1 zu erkennen, dass dem Kopfvorbau KV im Bereich der Schnittstelleneinrichtung S Schutzgas zugeführt wird, gezeigt bei Bezugszeichen 5. Das Schutzgas wird dann von dem oberen, mit der Kopfbasis KB fest verbundenen Teil des Kopfvorbaus KV über geeignete Schutzgasleitungen hin zu dem unteren Ringabschnitt des Kopfvorbaus KV geleitet, und von dort über entsprechende Leitungen zu einer Düse, mittels der das Schutzgas in das Innere des Mundstückes 3 eingeleitet werden kann. Die Düse durchdringt dabei die Innenhülse 3a und die Außenhülse 3b und ist in Bezug auf eine zentrale Schweißachse so angeordnet, dass das Schutzgas das Bauteil 4 innerhalb des Mundstückes 3 tangential anströmt.

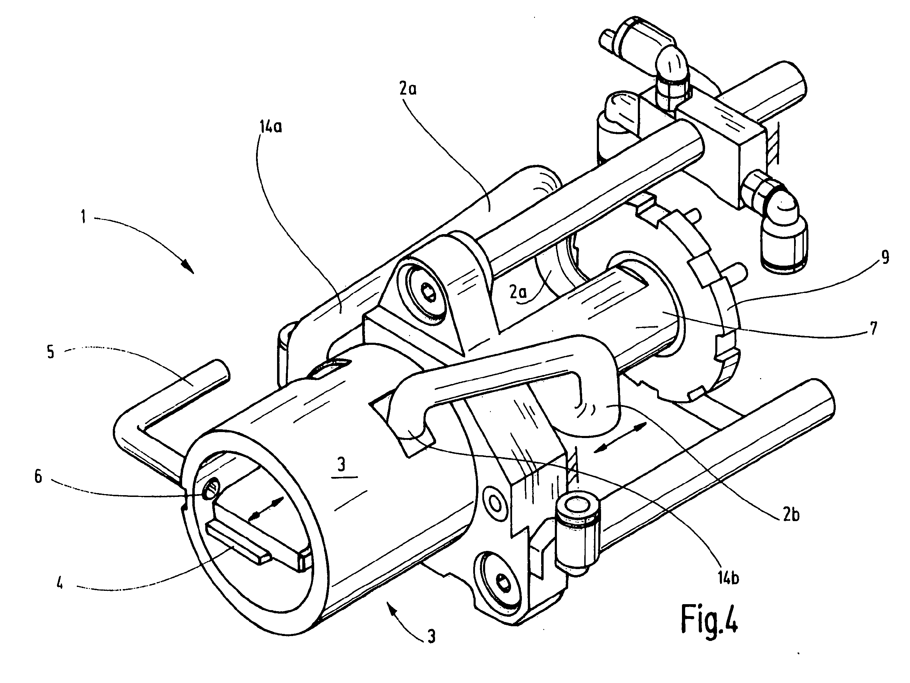

In den Fig. 3 und 4 ist eine Austrittsöffnung der Düse in den Innenraum des Mundstückes 3 hinein mit 6 bezeichnet.

Generell sind in den Figuren Doppelpfeile verwendet, sofern der Verlauf bzw. die Strömung des Schutzgases dargestellt werden soll.

Man erkennt in Fig. 1, dass Schutzgas von dem unteren Ringabschnitt des Kopfvorbaus KV nicht nur hin zu einer Schutzgaszufuhr 5 führbar ist, mittels der Schutzgas in das Mundstück an einem unteren Abschnitt hiervon einführbar ist. Vielmehr ist es auch möglich, wie es in Fig. 3 gezeigt ist, das Schutzgas zusätzlich in axialer Richtung von oben in das Mundstück 3 einströmen zu lassen.

Eine Ausströmöffnung ist generell an einem oberen Ende des Mundstückes 3 ausgebildet, derart, dass das Schutzgas aus dem Mundstück 3 heraus nach oben austritt, und zwar zwischen der Verbindungseinrichtung 7 (dem unteren Anschlussstück 11) und dem Ringabschnitt des feststehenden Teils des Kopfvorbaus KV.

Sowohl die Schweißstromkabel 2a, 2b als auch die Leitungen zum zuführen und Verteilen des Schutzgases können dabei ausschließlich an dem Kopfvorbau KV selbst ausgebildet sein. Lediglich ein einzelner Anschluss zum Zuführen von Schutzgas ist erforderlich, der in Fig. 1 links oben gezeigt ist

Ferner können die elektrischen Schweißstromkabel 2a, 2b und die Schutzgasleitungen nach Bedarf radial relativ kompakt an dem Kopfvorbau KV verlegt werden, so dass der Kopfvorbau KV nur geringe bzw. radial eingeschränkte Störkonturen besitzt.

Der gesamte Kopfvorbau KV lässt sich beispielsweise zu Wartungs- oder Austauschzwecken relativ einfach von der Kopfbasis KB entfernen, und zwar über die Schnittstelleneinrichtung S.

Ferner ist es nicht erforderlich, den Schweißstrom im Bereich der Kopfbasis KB aufzuteilen in einen durch die Spuleneinrichtung 15 und einen in die Halteeinrichtung 8 zu führenden Strom. Vielmehr reicht ein einzelner Stromanschluss im Bereich der Schnittstelleneinrichtung S aus. Die serielle Anbindung der Spuleneinrichtung 15 kann in vorteilhafter Weise alleine im Bereich des Kopfvorbaus KV erfolgen, nämlich von der Anschlussstelle 16 hin zu der Spuleneinrichtung 15 und von der Spuleneinrichtung 15 hin zu der Anschlussstelle 17, von wo aus der Strom dann in die Halteeinrichtung 8 und in das Bauteil 4 geleitet werden kann.

In Fig. 1 ist gezeigt, dass sich das Bauteil 4 vorzugsweise auf ein Werkstück wie ein Blech 18 schweißen lässt, das beispielsweise elektrisch mit Masse verbunden sein kann.

Bei einem Schweißprozess wird der Roboter R (oder ein zwischen der Kopfbasis KB und einem Betätigungsende des Roboters R vorgesehener Schlitten) so bewegt, dass das Mundstück 3 auf das Blech 18 aufgesetzt wird. Dabei federt das gegenüber dem Mundstück 3 vorstehende Bauteil 4 nach innen ein und liegt innerhalb des Mundstückes 3 auf dem Werkstück 18 auf. Ausgehend hiervon kann ein Pilotlichtstrom gezogen werden, und das Bauteil 4 kann mittels des Linearmotors LM von dem Werkstück 18 abgehoben werden (ohne dass das Mundstück 3 abgehoben wird).

Anschließend kann der volle Schweißstrom- zugeschaltet werden, so dass das untere Ende des Bauelementes 4 und ein gegenüberliegender Abschnitt des Werkstückes 18 anschmelzen. Anschließend kann das Bauteil 4 wieder auf das Werkstück 18 abgesenkt werden, entweder mittels der Feder F oder mittels des Linearmotors LM (oder beiden).

Anschließend wird der Schweißstrom abgeschaltet, so dass das Bauteil 4 starr mit dem Werkstück 18 verbunden ist.

Dabei erfolgt eine magnetische Lichtbogenablenkung, da der Schweißstrom auch durch die Spuleneinrichtung 15 verläuft. Ferner kann zu geeigneten Zeitpunkten Schutzgas zugeführt werden.

Weitere Details werden nachfolgend erläutert.

Der erfindungsgemäße Frontend- bzw. Kopfvorbau 1 für einen Schweißkopf SK weist ein Schutzgasmundstück 3 und eine Verbindungsvorrichtung (einen Verbindungsflansch) 7 auf. Der Kopfvorbau KV ist mittels einer Schnittstelleneinrichtung S mit der Kopfbasis KB verbindbar. Die Verbindungsvorrichtung weist Anschlussstücke 11 und 12 auf, die gegeneinander durch ein diese mechanisch verbindendes Isolierstück 13 isoliert sind. Am unteren Ende des Anschlussstücks 11 ist die Schweißelementaufnahme 8 (Halteeinrichtung) angeordnet, die zentrisch in dem Schutzgasmundstück 3 sitzt und zentrisch von einer MAC-Spule 15 umgeben ist.

Am unteren Ende des Schutzgasmundstücks 3 befindet sich eine erste Schutzgaszufuhr 5 für das zum Schweißen notwendige Schutzgas. Dieses wird derart in den Innenraum eingeleitet, dass der Schutzgasstrom tangential an dem zu verschweißenden Schweißelement 4 entlang streift. Diese Art von Schutzgaszufuhr hat den Vorteil, dass immer eine ausreichende Menge an Gas zur Verfügung steht, um den Schweißbereich sicher abdecken zu können. Aufgrund der Tatsache, dass der Schutzgasstrom relativ stabil (steif) aufgrund des Volumenstroms ist, wird die Schweißstelle auch vor Umgebungseinflüssen wie Zugluft wirksam geschützt. Es hat sich in Versuchen gezeigt, dass es unter Umständen sinnvoll ist, zwei Austrittsöffnungen 6 vorzusehen, die einander gegenüberliegend angeordnet sein können. Dies ist dann zweckmäßig, wenn ein besonders hoher Volumenstrom benötigt wird.

Ferner kann zusätzlich Schutzgas von oben in das Innere des Mundstückes 3 geleitet werden. Das aus dem Mundstück verdrängte Gas wird über eine obere Öffnung 3d abgeführt.

Der für den Schweißprozess benötigte Strom Iₛ wird über einen Anschlußzapfen 10 der Schnittstelleneinrichtung S in den Verbindungsflansch 7 eingeleitet, und zwar in das obere Anschlussstück 12. Zur Einleitung des Stroms in die Spule 15 wird über die Anschlussstelle 16 des Anschlussstückes 12 der Strom abgenommen und über das Schweißstromkabel 2a an den Spuleneingang 14a der MAC-Spule 15 geleitet. In der Spule 15 durchläuft der Strom wenigstens eine Windung und wird am Spulenausgang 14b wieder abgegriffen und zurück zum Verbindungsflansch 7 geleitet, jedoch über eine Anschlussstelle 17 zu dessen unterem Anschlussstück 11. Dieses ist elektrisch mit der Halteeinrichtung 8 und folglich mit dem Bauteil 4 verbunden.

Wird ein Schweißprozess ausgelöst, so bewegt sich der Schweißkopf SK samt dem Frontende 1 auf das Werkstück 18 zu. Das Schweißelement 4 kommt in Kontakt, und es kann ein Überwachungssignal detektiert werden (hier: geringe Spannung im Kurzschluss). Das Mundstück 3 setzt auf dem Werkstück 18 auf. Anschließend wird der Schweißprozess ausgelöst, der bewirkt, dass zunächst Schutzgas an die Schweißstelle strömt. Mit kurzer Verzögerung wird ein Pilotlichtbogen gezündet. Nach Einschalten des Pilotstroms wird das Schweißelement 4 vom Werkstück 18 abgehoben, mittels der Antriebseinrichtung LM. Es bildet sich ein Lichtbogen. Sobald dieser stabil steht, wird der Schweißstrom zugeschaltet

Wie bereits weiter oben erwähnt, wird der Strom, bevor er das Schweißelement 4 erreicht, noch durch die Spule 15 geschleift. Dies hat besonders den Vorteil, dass sich das Magnetfeld synchron zum Schweißstrom Iₛ ausbildet. Bei Einsatz einer Wechselstromquelle ändert sich die Feldrichtung, und man erhält zusätzlich einen bewegten Lichtbogen. In dem dargestellten Fall mit einem Schweißelement 4 mit rechteckförmigem Querschnitt würde der Lichtbogen in Form einer liegenden Acht an der Unterseite des Schweißflansches entlang wandern.

Aus rein funktionaler und mechanischer Sicht hat die Stromdurchführung gemäß der Erfindung den weiteren Vorteil, dass die Störkonturen um ein Vielfaches kleiner werden. Des Weiteren ist es nicht mehr notwendig, das dicke und unflexible Schweißstromkabel aus dem Gehäuse des Schweißkopfs SK oder einer Schweißpistole herauszuführen und um das Schutzgasmundstück zu wickeln. Bei einem Wechsel des Frontendes 1, z.B. wegen einer Reparatur oder wegen einer Umrüstung, kann, wie bei herkömmlichen Schweißköpfen für die Verfahrensvariante Hubzündungsschweißen, das Frontende ausgetauscht werden, ohne dass aufwändig Schweißstromkabel entfernt werden müssen. Ist es erforderlich, nur das Schutzgasmundstück 3 in Folge einer Kollision etc. auszutauschen, müssen lediglich die Anschlüsse der Schweißstromkabel 2a und 2b gelöst werden, und das Mundstück kann abgeschraubt werden. Daraus geht hervor, dass der Schweißkopf gemäß der Erfindung auch noch sehr wartungsfreundlich ist.

### Bezugszeichen

- SV: Schweißvorrichtung
- R: Roboter
- SK: Schweißkopf
- KB: Kopfbasis
- KV: Kopfvorbau (Front End)
- S: Schnittstelleneinrichtung
- LM: Linearmotor (bewegt 10, 11, 12, 13, 8, 4 sowie jeweils oberen Teil von 2a/b
- F: Feder
- V: Schweißspannungsversorgung
- 1: Frontende (Kopfvorbau)
- 2a/b: Schweißstromkabel
- 3: Schutzgasmundstück
- 3a: Mundstückinnenhülse
- 3b: Mundsttickaußenhülse
- 3d: obere Öffnung
- 3c: Ausnehmung in Mundstück für Zuleitung Schweißstromkabel
- 4: Schweißbauelement (Weldfasthalter)
- 5: Schutzgaszufuhr
- 6: Austrittsöffnung (Schutzgas) tangential in Mundstück
- 7: Verbindungsflansch (Verbindungseinrichtung)
- 8: Schweißelementaufnahme (Halteeinrichtung)
- 9: Nutmutter (Teil von Schnittstelleneinrichtung)
- 10: Schnittstellen-Anschlussstück
- 11: unteres Anschlussstück von 7
- 12: oberes Anschlussstück von 7
- 13: Isolierstück zwischen 11 und 12
- 14a: Spuleneingang
- 14b: Spulenausgang
- 15: MAC Spule
- 16: Anschlussstelle für Schweißstromkabel 2a
- 17: Anschlussstelle für Schweißstromkabel 2b
- 18: Blech (Werkstück)
- Doppelpfeile:: Schutzgasströmung

## Patentansprüche

1. Schweißkopf (SK) für eine Schweißvorrichtung (SV) zum Aufschweißen von nicht-rotationssymmetrischen Bauteilen (4) auf Werkstücke (18) wie z. B. Bleche, mit einem Kopfvorbau (KV), wobei der Kopfvorbau (KV) eine Halteeinrichtung (8) für das Bauteil (4) aufweist und dazu ausgebildet ist, einen Schweißstrom (Iₛ) von der Halteeinrichtung (8) zu dem Bauteil (4) zu führen,
**dadurch gekennzeichnet, dass**
die Halteeinrichtung (8) mittels einer Verbindungseinrichtung (7) mechanisch mit einer Schnittstelleneinrichtung (S) verbunden ist, über die der Schweißstrom (Iₛ) zuführbar ist, wobei die Verbindungseinrichtung (7) in ein erstes Anschlussstück (12) und ein zweites Anschlussstück (11) unterteilt ist, die elektrisch gegeneinander isoliert sind, so dass unmittelbar an dem Kopfvorbau (KV) ein weiterer elektrischer Verbraucher (15) seriell angeschlossen ist, indem der weitere elektrische Verbraucher (15) mit einem Ende an das erste Anschlussstück (12) und mit dem anderen Ende an das zweite Anschlussstück (11) angeschlossen wird.

2. Schweißkopf nach Anspruch 1, **dadurch gekennzeichnet, dass** das erste Anschlussstück (12) mit einem ersten elektrischen Anschluss (14a) einer Spuleneinrichtung (15) als definierten electrischen Verbrauchen elektrisch verbunden ist, so dass der Schweißstrom (Iₛ) von der Schnittstelleneinrichtung (S) über das erste Anschlussstück (12) in die Spuleneinrichtung (15) leitbar ist.

3. Schweißkopf nach Anspruch 2, **dadurch gekennzeichnet, dass** das zweite Anschlussstück (11) mit der Halteeinrichtung (8) und mit einem zweiten elektrischen Anschluss (14b) der Spuleneinrichtung (15) elektrisch verbunden ist, so dass der Schweißstrom (Iₛ) von der Spuleneinrichtung (15) über das zweite Anschlussstück (11) und die Halteeinrichtung (8) in das Bauteil (4) leitbar ist.

4. Schweißkopf nach einem der Ansprüche 1 - 3, **dadurch gekennzeichnet, dass** das erste und das zweite Anschlussstück (12, 11) in Richtung der Schweißachse miteinander ausgerichtet sind.

5. Schweißkopf nach einem der Ansprüche 1 - 4, **dadurch gekennzeichnet, dass** das erste und das zweite Anschlussstück (12, 11) mittels eines elektrischen Isolierstückes (13) elektrisch gegeneinander isoliert, aber mechanisch miteinander verbunden sind.

6. Schweißkopf nach einem der Ansprüche 1 - 5, **dadurch gekennzeichnet, dass** der Kopfvorbau (KV) ferner ein Mundstück (3) aufweist, das bei einem Schweißvorgang im Wesentlichen um das Bauteil (4) herum angeordnet ist, wobei die Halteeinrichtung (8) und das Mundstück (3) entlang einer Schweißachse relativ zueinander beweglich ausgebildet sind.

7. Schweißkopf nach Anspruch 6, **dadurch gekennzeichnet, dass** wenigstens eines der zwei Anschlussstücke (12, 11) über ein zugeordnetes Schweißstromkabel (2a, 2b) mit einer Spuleneinrichtung (15) als definierten electrischen Verbrauchen verbunden ist, die an dem Mundstück (3) festgelegt ist, wobei das Schweißstromkabel (2a, 2b) an einem oberen Bereich des Mundstückes (3) in dieses eingeführt ist.

8. Schweißkopf nach einem der Ansprüche 1 - 7, **dadurch gekennzeichnet, dass** der Kopfvorbau (KV) ferner ein Mundstück (3) aufweist, das bei einem Schweißvorgang im Wesentlichen um das Bauteil (4) herum angeordnet ist, wobei die Halteeinrichtung (8) und das Mundstück (3) entlang einer Schweißachse relativ zueinander beweglich ausgebildet sind, wobei an dem Mundstück eine Spuleneinrichtung (15) als definierten electrischen Verbrauchen mit wenigstens einer Windung angeordnet ist, wobei die Spuleneinrichtung (15) innerhalb einer Außenwand (3b) des Mundstückes (3) angeordnet ist.

9. Schweißkopf nach Anspruch 8, **dadurch gekennzeichnet, dass** das Mundstück (3) einen Ringraum aufweist, innerhalb dessen die Spuleneinrichtung (15) angeordnet ist.

10. Schweißkopf nach Anspruch 8 oder 9, **dadurch gekennzeichnet, dass** das Mundstück (3) mehrteilig ausgebildet ist, mit einem Innenteil (3a), innerhalb dessen das Bauteil (4) gehalten ist und an dessen Außenseite die Spuleneinrichtung (15) angeordnet ist, und mit einem Außenteil (3b), das die Spuleneinrichtung (15) umschließt und die Außenwand des Mundstückes (3) bildet.

11. Schweißkopf nach Anspruch 10, **dadurch gekennzeichnet, dass** das Außenteil (3b) wenigstens eine Ausnehmung zur Durchführung eines Schweißstromkabels (2a, 2b) aufweist.

12. Schweißkopf nach einem der Ansprüche 1 - 11, **dadurch gekennzeichnet, dass** der Kopfvorbau (KV) ferner ein Mundstück (3) aufweist, das bei einem Schweißvorgang im Wesentlichen um das Bauteil (4) herum angeordnet ist, wobei die Halteeinrichtung (8) und das Mundstück (3) entlang einer Schweißachse relativ zueinander beweglich ausgebildet sind, wobei an dem Mundstück (3) eine Schutzgaszuführeinrichtung (5) angeordnet ist, wobei die Schutzgaszuführeinrichtung (5) wenigstens eine Düse (6) aufweist, die so angeordnet ist, dass das Bauteil (4) innerhalb des Mundstückes (3) im Wesentlichen tangential anblasbar ist.

13. Schweißkopf nach einem der Ansprüche 1 - 12, **dadurch gekennzeichnet, dass** der Kopfvorbau (KV) eine obere Öffnung (3d) aufweist, über die in das Mundstück (3) eingeblasenes Schutzgas nach oben abgeführt werden kann.

14. Schweißkopf nach einem der Ansprüche 1 - 13, **dadurch gekennzeichnet, dass** der Kopfvorbau (KV) ferner ein Mundstück (3) aufweist, das bei einem Schweißvorgang im Wesentlichen um das Bauteil (4) herum angeordnet ist, wobei die Halteeinrichtung (8) und das Mundstück (3) entlang einer Schweißachse relativ zueinander beweglich ausgebildet sind, wobei an dem Mundstück (3) eine Schutzgaszuführeinrichtung (5) angeordnet ist, wobei die Schutzgaszuführeinrichtung (5) wenigstens einen Zuführkanal aufweist, der von außen zu dem Mundstück (3) geführt ist und an einem unteren Bereich des Mundstückes (3) in das Innere des Mundstückes (3) hinein geführt ist.

15. Schweißkopf nach einem der Ansprüche 1 - 14, **dadurch gekennzeichnet, dass** der Kopfvorbau (KV) einen festen Abschnitt aufweist, der starr mit der Kopfbasis (KB) verbunden ist und der das Schutzgasmundstück (3) beinhaltet.

16. Schweißkopf nach einem der Ansprüche 1 - 15, **dadurch gekennzeichnet, dass** ein in Bezug auf die Kopfbasis (KB) beweglicher Teil (9, 7, 8) des Kopfvorbaus (KV) über die Schnittstelleneinrichtung (S) zum einen den Schweißstrom (Iₛ) erhält und zum anderen mechanisch an einer Antriebseinrichtung (LM) zum Antreiben des beweglichen Teils (9, 8, 7) festgelegt ist.

## Claims

1. Welding head (SK) for a welding device (SV) for welding components (4) which are not rotationally symmetrical onto workpieces (18) such as for example metal sheets, with a head attachment (KV), the head attachment (KV) having a holding device (8) for the component (4) and being designed for carrying a welding current (Iₛ) from the holding device (8) to the component (4),
**characterized in that**
the holding device (8) is mechanically connected by means of a connecting device (7) to an interface device (S), via which the welding current (Iₛ) can be supplied, the connecting device (7) being subdivided into a first connection piece (12) and a second connection piece (11), which are electrically insulated from each other, wherein a further electrical consumer (15) is serially and directly connected to the head attachment (KV) **in that** the further electrical consumer is connected at one end to the first connection piece (12) and at the other end to the second connection piece (11).

2. Welding head according to Claim 1, **characterized in that** the first connection piece (12) is electrically connected to a first electrical connection (14a) of a coil device (15) as the defined electrical consumer, so that the welding current (Iₛ) can be conducted from the interface device (S) via the first connection piece (12) into the coil device (15).

3. Welding head according to Claim 2, **characterized in that** the second connection piece (11) is electrically connected to the holding device (8) and to a second electrical connection (14b) of the coil device (15), so that the welding current (Iₛ) can be conducted from the coil device (15) via the second connection piece (11) and the holding device (8) into the component (4).

4. Welding head according to one of Claims 1 - 3, **characterized in that** the first and second connection pieces (12, 11) are aligned with each other in the direction of the welding axis.

5. Welding head according to one of Claims 1 - 4, **characterized in that** the first and second connection pieces (12, 11) are electrically insulated from each other by means of an electrical insulating piece (13), but are mechanically connected to each other.

6. Welding head according to one of claims 1 - 5, **characterized in that** the head attachment (KV) also having a mouthpiece (3), which is arranged substantially around the component (4) during a welding operation, the holding device (8) and the mouthpiece (3) being designed such that they are movable in relation to each other along a welding axis.

7. Welding head according to Claim 6, **characterized in that** at least one of the two connection pieces (12, 13) is connected via an assigned welding current cable (2a, 2b) to a coil device (15) as the defined electrical consumer, which is fixed on the mouthpiece (3), the welding current cable (2a, 2b) being inserted into the mouthpiece (3) at an upper region of the latter.

8. Welding head according to one of Claims 1 - 7, **characterized in that** the head attachment (KV) also having a mouthpiece (3), which is arranged substantially around the component (4) during a welding operation, the holding device (8) and the mouthpiece (3) being designed such that they are movable in relation to each other along a welding axis, wherein a coil device (15) as the defined electrical consumer with at least one winding is arranged at the mouthpiece, the coil device (15) being arranged within an outer wall (3b) of the mouthpiece (3).

9. Welding head according to Claim 8, **characterized in that** the mouthpiece (3) has an annular space, within which the coil device (15) is arranged.

10. Welding head according to Claim 8 or 9, **characterized in that** the mouthpiece (3) is of a multipart form, with an inner part (3a), within which the component (4) is held and on the outer side of which the coil device (15) is arranged, and with an outer part (3b), which encloses the coil device (15) and forums the outer wall of the mouthpiece (3).

11. Welding head according to Claim 10, **characterized in that** the outer part (3b) has at least one clearance for leading through a welding current cable (2a, 2b).

12. Welding head according to one of Claims 1 - 11, **characterized in that** the head attachment (KV) also having a mouthpiece (3), which is arranged substantially around the component (4) during a welding operation, the holding device (8) and the mouthpiece (3) being designed such that they are movable in relation to each other along a welding axis, wherein a protective gas supply device (5) is arranged at the mouthpiece (3), the protective gas supply device (5) having at least one nozzle (6), which is arranged in such a way that the component (4) within the mouthpiece (3) can be blasted substantially tangentially.

13. Welding head according to one of Claims 1 - 12, **characterized in that** the head attachment (KV) has an upper opening (3d), via which protective gas blown into the mouthpiece (3) can be discharged upwards.

14. Welding head according to one of Claims 1 - 13, **characterized in that** the head attachment (KV) also having a mouthpiece (3), which is arranged substantially around the component (4) during a welding operation, the holding device (8) and the mouthpiece (3) being designed such that they are movable in relation to each other along a welding axis, wherein a protective gas supply device (5) is is arranged at the mouthpiece (3), the protective gas supply device (5) having at least one supply channel, which is led from outside to the mouthpiece (3) and is led into the interior of the mouthpiece (3) at a lower region of the mouthpiece (3).

15. Welding head according to one of Claims 1 - 14, **characterized in that** the head attachment (KV) has a fixed portion which is rigidly connected to the head base (KB) and which comprises the protective gas mouthpiece (3).

16. Welding head according to one of Claims 1 - 15, **characterized in that** a part (9, 7, 8) of the head attachment (KV) that is movable with respect to the head base (KB) on the one hand receives the welding current (Iₛ) via the interface device (S) and on the other hand is mechanically fixed to a drive device (LM) for driving the movable part (9, 8, 7).

## Revendications

1. Tête de soudage (SK) pour un dispositif de soudage (SV) pour souder des éléments non symétriques en rotation (4) sur des pièces (18) comme par exemple des tôles, avec une monture de tête (KV), dans laquelle la monture de tête (KV) comprend un dispositif de support (8) pour l'élément (4) et est conçue de façon à conduire un courant de soudage (Iₛ) du dispositif de support (8) à l'élément (4), **caractérisée en ce que** le dispositif de support (8) est assemblé mécaniquement au moyen d'un dispositif d'assemblage (7) à un dispositif d'interface (S), par l'intermédiaire duquel le courant de soudage (Iₛ) peut être fourni, le dispositif d'assemblage (7) étant divisé en une première pièce de raccordement (12) et une deuxième pièce de raccordement (11), qui sont électriquement isolées l'une de l'autre, de telle manière qu'un autre consommateur électrique (15) soit raccordé en série, directement sur la monture de tête (KV), du fait que l'autre consommateur électrique (15) est raccordé par une extrémité à la première pièce de raccordement (12) et par l'autre extrémité à la deuxième pièce de raccordement (11).

2. Tête de soudage selon la revendication 1, **caractérisée en ce que** la première pièce de raccordement (12) est reliée électriquement à un premier raccord électrique (14a) d'un dispositif de bobine (15) sous la forme d'un consommateur électrique défini, de telle manière que le courant de soudage (Iₛ) puisse être conduit du dispositif d'interface (S) au dispositif de bobine (15) via la première pièce de raccordement (12).

3. Tête de soudage selon la revendication 2, **caractérisée en ce que** la deuxième pièce de raccordement (11) est reliée électriquement au dispositif de support (8) et à un deuxième raccord électrique (14b) du dispositif de bobine, (15), de telle manière que le courant de soudage (Iₛ) puisse être conduit du dispositif de bobine (15) à l'élément (4) via la deuxième pièce de raccordement (11) et le dispositif de support (8).

4. Tête de soudage selon l'une quelconque des revendications 1 à 3, **caractérisée en ce que** la première et la deuxième pièce de raccordement (12, 11) sont alignées l'une par rapport à l'autre dans la direction de l'axe de soudage.

5. Tête de soudage selon l'une quelconque des revendications 1 à 4, **caractérisée en ce que** la première et la deuxième pièce de raccordement (12, 11) sont électriquement isolées l'une de l'autre au moyen d'une pièce d'isolation électrique (13) mais sont mécaniquement assemblées l'une à l'autre.

6. Tête de soudage selon l'une quelconque des revendications 1 à 5, **caractérisée en ce que** la monture de tête (KV) présente en outre un embout (3) qui, lors d'une opération de soudage, est disposé essentiellement autour de l'élément (4), le dispositif de support (8) et l'embout (3) étant réalisés sous forme mobile l'un par rapport à l'autre le long d'un axe de soudage.

7. Tête de soudage selon la revendication 6, **caractérisée en ce qu'**au moins une des deux pièces de raccordement (12, 11) est reliée par un câble de courant de soudage associé (2a, 2b) à un dispositif de bobine (15) sous la forme d'un consommateur électrique défini, qui est fixé sur l'embout (3), le câble de courant de soudage (2a, 2b) étant introduit dans l'embout (3) dans une région supérieure de celui-ci.

8. Tête de soudage selon l'une quelconque des revendications 1 à 7, **caractérisée en ce que** la monture de tête (KV) présente en outre un embout (3) qui, lors d'une opération de soudage, est disposé essentiellement autour de l'élément (4), le dispositif de support (8) et l'embout (3) étant réalisés sous forme mobile l'un par rapport à l'autre le long d'un axe de soudage, un dispositif de bobine (15) avec au moins une spire étant disposé sur l'embout sous la forme d'un consommateur électrique défini, le dispositif de bobine (15) étant disposé à l'intérieur d'une paroi extérieure (3b) de l'embout (3).

9. Tête de soudage selon la revendication 8, **caractérisée en ce que**, l'embout (3) présente une chambre annulaire, à l'intérieur de laquelle le dispositif de bobine (15) est placé.

10. Tête de soudage selon la revendication 8 ou 9, **caractérisée en ce que** l'embout (3) est réalisé en plusieurs parties, avec une partie intérieure (3a) à l'intérieur de laquelle l'élément (4) est maintenu et sur le côté extérieur de laquelle le dispositif de bobine (15) est placé, et avec une partie extérieure (3b), qui entoure le dispositif de bobine (15) et qui forme la paroi extérieure de l'embout (3).

11. Tête de soudage selon la revendication 10, **caractérisée en ce que** la partie extérieure (3b) présente au moins un évidement pour permettre le passage d'un câble de courant de soudage (2a, 2b).

12. Tête de soudage selon l'une quelconque des revendications 1 à 11, **caractérisée en ce que** la monture de tête (KV) présente en outre un embout (3) qui, lors d'une opération de soudage, est disposé essentiellement autour de l'élément (4), le dispositif de support (8) et l'embout (3) étant réalisés sous forme mobile l'un par rapport à l'autre le long d'un axe de soudage, un dispositif d'introduction de gaz protecteur (5) étant disposé sur l'embout (3), le dispositif d'introduction de gaz protecteur (5) présentant au moins une buse (6), qui est disposée de telle manière que l'élément (4) puisse être soumis à un soufflage essentiellement tangentiel à l'intérieur de l'embout (3).

13. Tête de soudage selon l'une quelconque des revendications 1 à 12, **caractérisée en ce que** la monture de tête (KV) présente une ouverture supérieure (3d), par laquelle un gaz protecteur insufflé dans l'embout (3) peut être évacué vers le haut.

14. Tête de soudage selon l'une quelconque des revendications 1 à 13, **caractérisée en ce que** la monture de tête (KV) présente en outre un embout (3) qui, lors d'une opération de soudage, est disposé essentiellement autour de l'élément (4), le dispositif de support (8) et l'embout (3) étant réalisés sous forme mobile l'un par rapport à l'autre le long d'un axe de soudage, un dispositif d'introduction de gaz protecteur (5) étant disposé sur l'embout (3), le dispositif d'introduction de gaz protecteur (5) présentant au moins un canal d'arrivée, qui est mené de l'extérieur vers l'embout (3) et qui est mené à l'intérieur de l'embout (3) dans une région inférieure de l'embout (3).

15. Tête de soudage selon l'une quelconque des revendications 1 à 14, **caractérisée en ce que** la monture de tête (KV) présente une partie fixe, qui est assemblée rigidement à la base de tête (KB) et qui contient l'embout à gaz protecteur (3).

16. Tête de soudage selon l'une quelconque des revendications 1 à 15, **caractérisée en ce qu'**une partie (9, 7, 8) de la monture de tête (KV), mobile par rapport à la base de tête (KB), d'une part reçoit le courant de soudage (Iₛ) et d'autre part est fixée mécaniquement à un dispositif d'entraînement (LM) pour l'entraînement de la partie mobile (9, 8, 7), par l'intermédiaire du dispositif d'interface (S).
